# EUROPEAN PATENT APPLICATION

(11) **EP 4 793 060 A1**
(43) Date of publication of application: **19.08.2026**
(21) Application number: 26158302.5
(22) Date of filing: 12.02.2026
(51) Int. Cl.: B60B 7/20, B60B 27/02

(54) **WHEEL ASSEMBLY FOR A MOTORCYCLE**

(30) Priority: 14.02.2025 IT 202500002856
(71) Applicant: Piaggio & C. S.P.A., 56025 Pontedera Pisa (IT)
(72) Inventor: SANTUCCI, Mario, 56025 PONTEDERA (IT)
(74) Representative: Carangelo, Pierluigi

(57) **Abstract**

A wheel assembly (10) for a motorcycle is described, comprising a wheel rim (15) on which a tire (16) is mounted, the wheel rim being mounted on a hub (14). The hub is rotatably mounted on a fixed, non-rotating wheel pin (20), defining a rotation axis of the wheel rim. A hubcap (30) is arranged in correspondence with the wheel pin and mounted integrally with the wheel pin, such that when said wheel assembly rotates about the wheel pin, the hubcap does not rotate, and in which the hubcap is contained within a volume defined by the wheel rim and tire assembly.

## Description

### TECHNICAL FIELD

The present invention relates to a wheel assembly for a motorcycle provided with a hubcap, in particular for a scooter-type motorcycle.

### BACKGROUND ART

A motorcycle hubcap is a functional and decorative element, mounted on the wheel rim in correspondence with, and covering a wheel pin. The main function thereof is to conceal and protect the underlying components, such as the hub bearings and the wheel pin, from dust and dirt. The hubcaps may be fixed or, in some cases, non-rotating, keeping the visible part (such as the logo or symbol) always correctly oriented during the rotation of the wheel, by virtue of a counterweight or similar mechanism.

In the first version, the hubcaps are provided with a counterweight, i.e., a suitable mass integrated within the hubcap. The counterweight allows the hubcap to remain stable in a specific position, keeping the visible part (the logo) always in the vertical position or with a desired orientation.

When the wheel rotates, the centrifugal force tends to rotate the hubcap. However, the internal counterweight acts so that, by exploiting gravity, the hubcap is automatically oriented correctly and remains stable during movement. The visible part of the hubcap, therefore, does not rotate but remains fixed by virtue of the force of gravity.

The visual effect is that the central part containing the logo always remains correctly oriented. This is particularly appreciated in applications where the vehicle's aesthetics are crucial, such as in sports vehicles or luxury cars.

In another embodiment, non-rotating hubcaps are known which exploit the particular structure of the wheel assembly, in which the wheel pin remains fixed, and the wheel rim is rotatably mounted in correspondence with the hub, with respect to the wheel pin.

An example is described in US4981329A. This document describes a non-rotating hubcap for motor vehicles comprising a mounting flange fastened to the wheel pin that is fixed and to which, in turn, a cover plate is fastened. Thereby, the cover plate does not rotate, allowing any markings on the surface thereof to remain visible. Furthermore, the cover plate is provided with a dust cap that prevents dust and dirt from entering between the wheel and the cover. The mounting flange is fastened to the wheel pin and, by virtue of a system of screws and pins, keeps the cover plate stable, preventing it from rotating together with the wheel itself. Essentially, the invention prevents the cover plate from rotating with respect to the wheel, by virtue of the fixed mounting thereof on the shaft.

This solution is suitable for automobiles, but it is not suitable for motorcycles for the following reasons.

Firstly, the mounting flange protrudes with respect to the wheel rim. It is fastened at the end of the wheel shaft and extends outwards, creating a base on which the cover plate is mounted.

In this configuration, the protrusion of the flange with respect to the wheel hub is an essential feature, allowing the use of a cover plate with a greater diameter, so as to make the logo printed thereon more visible.

However, the protrusion of the flange and the use of a larger cover plate increase the overall weight of the wheel assembly. On a motorcycle, where every reduction in weight is critical for performance (acceleration, maneuverability, and fuel consumption), this represents a disadvantage. An increased weight of the wheel assembly could compromise the dynamics of the motorcycle, in particular during maneuvers at low speed or on tight bends.

Furthermore, the protrusion of the flange generates greater aerodynamic resistance. Since motorcycles reach high speeds and the rider is in a more exposed position to the air, a protruding wheel cover could increase resistance, reducing the efficiency of the vehicle at high speeds. Nevertheless, in document US4981329 the mounting flange must protrude beyond the rim to maximize visibility of the cover plate displaying a message or an advertisement.

Furthermore, the protrusion of the flange could be more susceptible to damage when the motorcycle travels on uneven roads or at low speed, especially in situations such as on tight bends or during angled maneuvers. The protruding part could knock against obstacles or hard surfaces, damaging the cover plate or the flange. The protrusion could also compromise maneuverability in tight spaces or in intense driving situations, such as during maneuvers at low-speed or on tight bends.

The use of hubcaps rotating independently with respect to the wheel pin and rim is also known in the prior art, such as, for example, the solution of the patent document US2005146204. In this solution, a counter-rim rotates independently with respect to the rest of the wheel rim and pin to generate the effect of continuing to rotate by inertia even when the vehicle is stationary, as it occurs for the spinner toy. This solution is in complete contrast to the problem of maintaining the orientation of a hubcap in all vehicle riding conditions.

The possibility of limiting the rotation of a rotating hubcap like the one in the previous example is also known, by means of a counterweight that prevents or limits the rotation by inertia or friction with the rim of the hubcap. A similar solution is described in patent document KR100989188.

Both in the solution of document US2005146204 and in the solution of document KR100989188, the hubcaps are rotating with respect to the wheel pin.

For motorcycles, these factors also represent a risk of safety for the rider and other vehicles.

### SUMMARY

It is the object of the present invention to provide a wheel assembly for a motorcycle and a relative hubcap, of the non-rotating type, which overcomes the drawbacks of the solutions according to the prior art.

It is also an object of the present invention to provide a hubcap structure for a motorcycle, of the non-rotating type, which is structurally simple and retrofittable in an existing motorcycle wheel assembly. The term "hubcap" means a cover, specifically a cover of the wheel hub.

These and other objects are achieved by a wheel assembly for a motorcycle comprising a wheel rim provided with a tire, the wheel rim being connected to a hub. The hub is rotatably mounted onto a non-rotating wheel pin. The wheel pin defines a rotation axis of the wheel rim.

A hubcap is mounted integrally with the wheel pin, so that when the wheel assembly rotates about the wheel pin, the hubcap remains fixed, i.e., it does not rotate. The hubcap is inside the volume defined by the wheel assembly, i.e., by the wheel rim and the tire. Thereby, the non-rotating hubcap is integrated into the wheel assembly. The hubcap, therefore, does not protrude beyond the volume defined by the wheel assembly. When viewed from the outside, the hubcap is substantially coplanar to a front face of the wheel rim.

In particular, a gap is defined between the hubcap and the wheel rim. The gap, i.e., an empty space, precludes contact between the rotating wheel rim and the non-rotating hubcap.

Advantageously, the hub is fitted onto the wheel pin and a fixing element blocks the hub on the wheel pin. The hubcap is mounted integrally with the fixed wheel pin and/or to said fixing element of the wheel pin.

In particular, the hubcap comprises a covering portion and an anchoring portion extending from the covering portion. The anchoring portion is shaped to achieve a direct or indirect coupling with the wheel pin and/or with said fixing element of the wheel pin. Thereby, the logo and/or symbol remain in the fixed position when the motorcycle is moving and viewed from an external viewpoint.

The covering portion comprises a visible face, facing outwards, on which a logo and/or a symbol is provided, and a rear face, facing toward the wheel rim.

In particular, a spacer element is provided, mounted integrally with the wheel pin and/or to said fixing element, and in which said hubcap is connected to said spacer element. Thereby, the spacer element serves as an interface between the wheel pin and the hubcap. By virtue of the spacer element, assembling of the hubcap to the wheel pin is simplified. The spacer element is designed with specific dimensions to ensure the desired gap between the wheel rim and the hubcap.

In particular, the spacer element comprises a connecting portion adapted to be mounted in correspondence with the wheel pin and a mounting portion, extending from the connecting portion, shaped to accommodate said hubcap. Thereby, the connecting portion, which is integrally mounted to the wheel pin, ensures that the spacer element is well fixed in position, reducing the risk of loosening or undesired movements during use. The mounting portion, shaped to accommodate the hubcap, ensures that the hubcap is correctly positioned and remains stable during the rotation of the wheel assembly. In particular, the connecting portion and the mounting portion are obtained in a single piece. Thus, by integrating the connecting portion and the mounting portion into a single spacer element, the need for separate components is reduced, simplifying the design and reducing the number of operations required for assembly.

In a first embodiment, the spacer element comprises a connecting portion arranged downstream of said fixing element. In detail, the connecting portion is mounted at the head of said wheel pin by means of at least one connecting element, which is preferably removable. In particular, said connecting element is, or comprises a screw connecting element, coaxial to the axis defined by the wheel pin.

In a second embodiment, the spacer element comprises a connecting portion fitted onto the wheel pin upstream of said fixing element. In particular, the spacer element has a tubular shape and is integrally connected to the wheel pin by means of the fixing element of the same wheel pin. Thus, since the spacer element is fastened directly upstream of the pin fixing element, the need for additional components or separate fastenings is avoided. The tubular shape of the spacer element allows mounting the fixing element of the wheel pin, by directly accessing the inside the spacer element with a tool. The connection of the connecting portion inserted first onto the wheel pin and then blocked by the fixing element makes the system particularly resistant to mechanical stress and vibrations. The fitted connection ensures that the spacer element firmly adheres to the wheel pin, reducing the risk of it moving or loosening during use. This results in greater safety and reliability over time, reducing the need for frequent maintenance or additional fastening checks. Furthermore, this expedient simplifies maintenance and replacement operations.

In a third embodiment, the hubcap comprises an anchoring portion, extending in length, which is shaped to create a form-fit coupling with said fixing element of the wheel pin. The anchoring portion comprises an end portion, which creates a form-fit coupling with the fixing element from the outer side. In particular, if the fixing element is a hexagonal nut and the end portion has a complementary hexagonal configuration.

In particular, the wheel rim comprises a fixing flange for mounting the wheel rim onto the hub. Alternatively, the wheel rim integrates the hub in one piece.

In particular, the fixing flange is recessed inside the wheel rim. In other words, the fixing flange is embedded in the volume defined by the wheel rim. Specifically, the fixing flange is accommodated inside the wheel rim, defining a fastening surface, said fastening surface being comprised between the mutually opposite end faces of the wheel rim.

In detail, the fixing flange comprises: a pin seat, located at the wheel pin, and fixing holes angularly spaced apart from one another, intended to fix the wheel rim to the hub. The fixing holes are radially spaced apart from the pin seat. The pin seat is an opening which, in use, is arranged frontally with respect to the wheel pin and the relative fixing element.

Connecting spokes preferably extend from the fixing flange to the wheel rim. In a first embodiment, the fixing flange and the connecting spokes are made in one piece and connected to the wheel rim by mechanical connecting means, e.g., a plurality of connecting screws, angularly offset from one another and arranged at the wheel rim. In a preferred embodiment, the fixing flange, the connecting spokes and the wheel rim are made in one piece.

In particular, the hubcap is sized to shield the pin seat.

In a further embodiment, the hubcap is sized to shield the pin seat and the fixing flange of the wheel rim.

In the first version, the size of the hubcap substantially corresponds to the size of the pin seat, keeping said gap defined as the difference between the size of the hubcap and the size of the pin seat.

In particular, the hubcap may be sized so as to be contained within the hub, when viewed frontally along the rotation axis. In practice, the hubcap does not protrude radially beyond the hub, improving the appearance thereof.

In the second version, the size of the hubcap is greater in the radial direction, extending to cover both the pin seat and the fixing flange. In such a case, the gap is defined between the front face of the wheel rim, in particular, between the surface of the fixing flange and the rear face of the hubcap.

### DESCRIPTION OF THE DRAWINGS

These and other advantages will become apparent in greater detail from the following description of an example of embodiment given in and indicative and non-limiting way, with reference to the accompanying drawings.

In the drawings:
- Figure 1 shows a perspective view of a motorcycle comprising a wheel assembly and a relative hubcap according to the present invention;
- Figure 2 shows a perspective view of the wheel assembly and the relative hubcap according to the present invention;
- Figure 3 shows a sectional view of the wheel assembly provided with the relative hubcap in a first embodiment, according to the present invention;
- Figure 4 shows a sectional view of the wheel assembly provided with the relative hubcap in a second embodiment, according to the present invention;
- Figure 5 shows a sectional view of the wheel assembly provided with the relative hubcap in a third embodiment, according to the present invention,
- Figures 6 and 7 show a sectional view and a perspective view, respectively, of the wheel assembly provided with the relative hubcap in a fourth embodiment according to the present invention.

### DETAILED DESCRIPTION

The following description of one or more embodiments of the invention relates to the accompanying drawings. The same reference numerals in the drawings identify identical or similar elements. The object of the invention is defined by the appended claims. The technical details, structures or features of the solutions described below may be combined with one another in any manner.

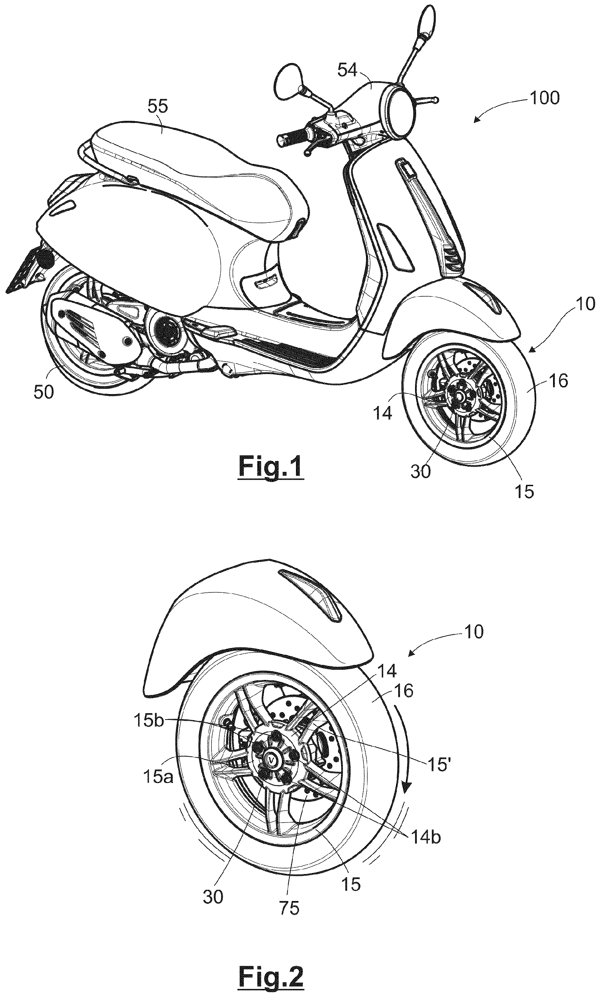

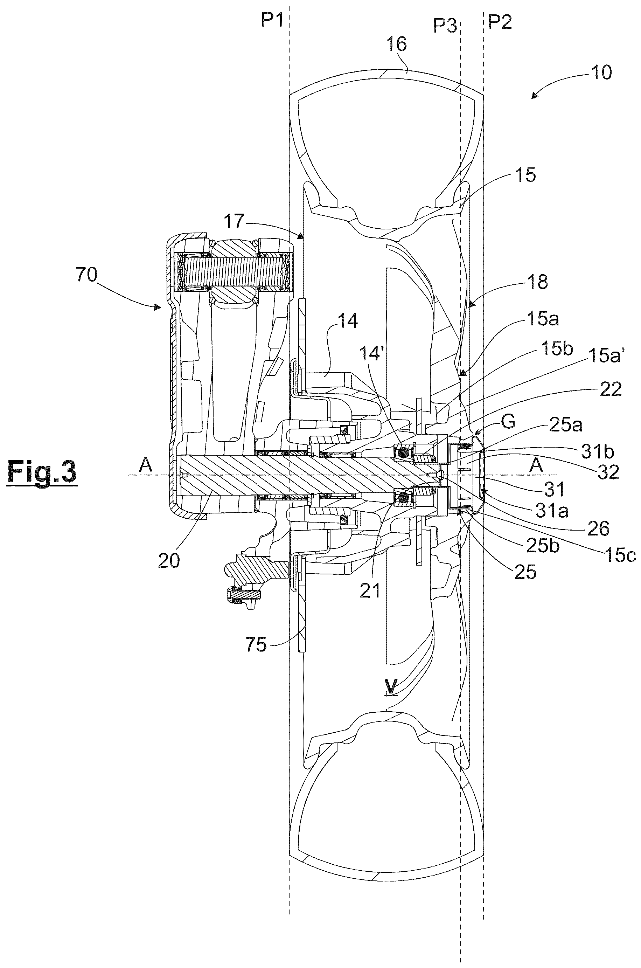

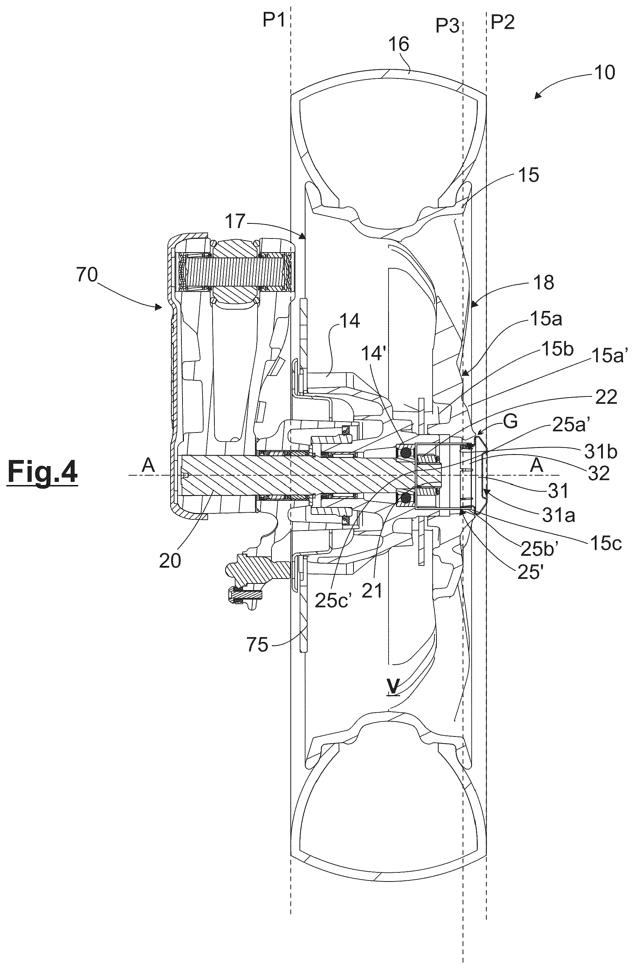

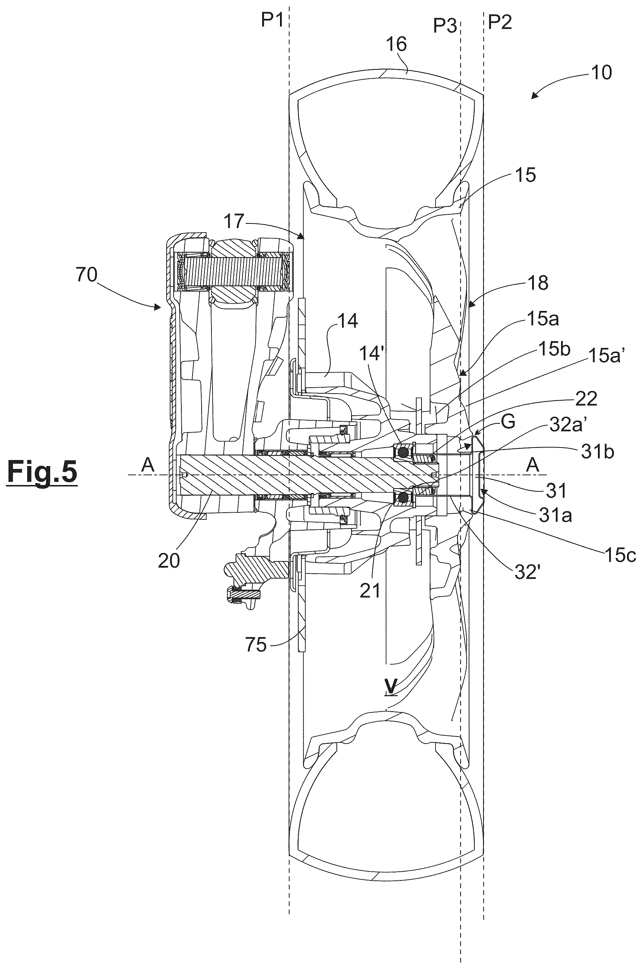

Figure 1 depicts a motorcycle with reference numeral 100, in particular, a scooter, comprising a wheel assembly 10 according to the present invention. In particular, the wheel assembly 10 is a steering front wheel 10 controlled by a steering handlebar 54. The front wheel comprises a suspension assembly 70 (Figures 3-6). The motorcycle 100 further comprises, as is known, a rear wheel 50, in particular, a driving wheel, and a saddle 55.

As better shown in figure 2, the wheel assembly 10 comprises a wheel rim 15, hereinafter also rim, on which a tire 16 is mounted. The rim 15 is connectable to a hub 14 (Figures 3-6). Alternatively, the rim 15 comprises the hub 14 in one piece. The hub 14 is shaped to be rotatably connected to a wheel pin 20. The wheel pin 20 is a fixed, i.e., non-rotating, pin. Bearings 14' are arranged between the hub 14 and the wheel pin 20, which allow the hub 14, and therefore the rim 15, to rotate about the wheel pin 20. The wheel pin 20 defines a rotation axis A-A of the rim 15.

A hubcap 30 is positioned at the wheel pin 20 and is integrally mounted, directly or indirectly, to the latter, so that, when the wheel assembly 10 rotates about the wheel pin 20, the hubcap 30 remains still, not rotating. In particular, the hubcap 30 is contained within a volume V defined by the wheel assembly 10. The hubcap 30 mounted on the wheel pin 20 is visible from the outside, and does not project or extend beyond the outer ends of the wheel assembly 10. The hubcap 30 is located within the structure of the wheel assembly 10, conforming to the outer profile of the latter. Thus, the non-rotating hubcap 30 has a clean appearance, without protrusions, which could interfere with other parts of the system or with the overall aesthetics of the wheel assembly 10.

In detail, the volume V of the wheel assembly 10 is defined as follows. As shown in figures 3,4 and 5, the tire 16 mounted on the rim 15 defines a first end plane P1 and a second end plane P2, opposite each other, orthogonal to the rotation axis A-A. The distance between the first end plane P1 and the second end plane P2 defines the width of the wheel assembly 10, along a direction parallel to the rotation axis A-A.

The volume V of the wheel assembly 10 is the space enclosed between the first P1 and the second end plane P2, and the overall radial dimension of the rim 15 provided with the tire 16.

More specifically, the hubcap 30 is integrated into the volume of the rim 15. The wheel rim 15 comprises a first face 17 and a second face 18 opposite each other. The hubcap 30 is confined within the space defined by the two opposite faces 17,18 and does not project beyond.

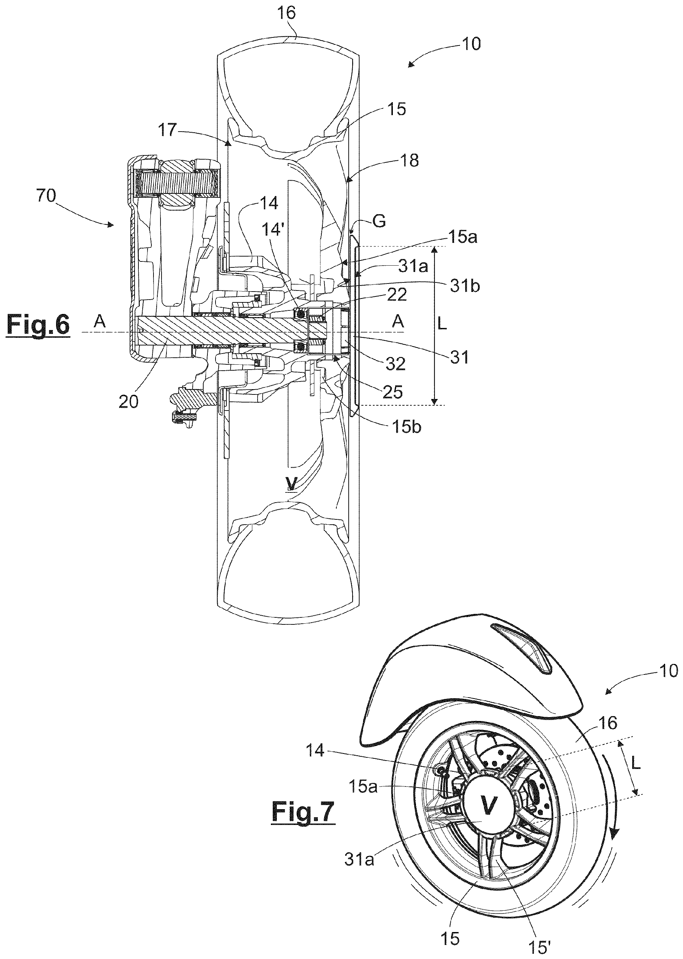

The non-rotating hubcap 30 comprises a visible face 31a on which a logo is present, for example, shown in figure 2 or 7. Thereby, the visible face 31a of the hubcap 30 allows a logo and/or a symbol to be displayed, giving a customized and distinctive appearance. The static nature thereof ensures that the logo does not change position during the rotation of the wheel assembly 10. In other words, the visible face 31a allows the logo to be always visible from the outside, independently of the movement of the wheel. The logo remains in a fixed position and therefore clearly visible, also when the vehicle is moving. Since the logo is static and always outwards, visibility remains constant during use, without alterations.

Structurally, the rim 15 comprises a fixing flange 15a which is inside the rim 15. In detail, the fixing flange 15a is recessed in the volume of the wheel rim 15. More precisely, the fixing flange 15a is positioned inside the wheel rim 15, creating a fastening surface 15a' defining a plane P3. The plane P3 lies between the first face 17 and the second face 18 of the wheel rim 15, or between the first plane P1 and the second plane P2.

The fixing flange 15a comprises, in turn, a pin seat 15c, which faces the pin 20, and fixing holes 15b obtained radially with respect to the pin seat 15c. The fastening holes 15b are angularly spaced apart from one another to fasten the rim 15 to the hub 14. In particular, 14b denotes fastening bolts mounted, as is known, in correspondence with the hub 14 for integrally mounting the rim 15, once it has been fitted onto the wheel pin 20. Connecting spokes 15' extend from the fixing flange 15a to the wheel rim 15. In the embodiment shown in the figures, the fixing flange 15a, the connecting spokes 15' and the rim 15 are made in one piece. In a structural variant, not shown, the fixing flange 15a and the connecting spokes 15' are made in one piece and connected to the wheel rim 15 by mechanical connecting means, e.g., a plurality of connecting screws, angularly offset from one another and arranged in correspondence with the wheel rim 15.

Structurally, the hub 14 is fitted on the wheel pin 20. In the version shown in the figures, the wheel pin 20 comprises a fixing element 22 that blocks the hub 14 on the wheel pin 20. In particular, the hubcap 30 - in order to remain fixed on rotation - is mounted integrally with the wheel pin 20 and/or to the fixing element 22 of the wheel pin 20. For example, the fixing element 22 is an internally threaded nut, which is tightened onto a head portion 21 of the wheel pin 20, which is also threaded, in a known manner. On the opposite side, the pin 20 is connected to the suspension assembly, which is globally denoted with 70 and of the known type. In detail, the suspension assembly 70 is of the single-arm type. On the side of the suspension assembly 70, there is further provided a brake disk 75.

In particular, a gap is defined, i.e., a non-contact empty space, between the hubcap 30 and the rim 15. The gap G is, for example, between 1 and 10 mm, in particular, between 3 and 7 mm. The gap G allows the rim 15 to rotate without interference with respect to the hubcap 30 in the fixed position, integrally with the non-rotating wheel pin 20.

In particular, the hubcap 30 comprises a covering portion 31 and an anchoring portion 32 extending from the covering portion 32. The anchoring portion 32 is shaped to achieve a direct, or indirect coupling with the wheel pin 20 and/or the fixing element 22. Thereby, the logo and/or the symbol remain fixed and visible also when the motorcycle is moving, keeping the position thereof stable when observed from an external perspective.

The covering portion 31 comprises a visible face 31a, facing outward, showing the logo and/or symbol, and a rear face 31b, facing toward the wheel rim.

According to a preferred embodiment, the wheel assembly 10 provides for the use of a spacer element 25,25' which is integrally mounted to the wheel pin 20 and/or to the fixing element 22, thus forming a direct connection between the latter and the hubcap 30. The spacer element 25,25' allows maintaining the hubcap 30 in the desired position, ensuring a precise alignment and greater stability. In particular, the spacer element 25,25', in the configurations described below, performs two functions: it facilitates assembling and disassembling the hubcap 30 to/from the wheel pin 20 and/or to/from the fixing element 22, and it provides shielding protection to the pin seat 15c, preventing debris from entering the zone of the hub 14.

In the first embodiment, shown in figure 3, the spacer element 25 includes a connecting portion 25a, which is securely fastened to the wheel pin 20 and positioned downstream of the fixing element 22. Downstream positioning means that, firstly, the fixing element 22 is mounted, and then, the connecting portion 25a is secured. A mounting portion 25b intended to accommodate the hubcap 30 extends from the connecting portion 25a so as to keep it fixed and stable when the vehicle is moving. This configuration ensures that the hubcap 30 does not move or become damaged during use, improving reliability.

In structural details, the connecting portion 25a is mounted at the head portion 21 of the wheel pin 20 by virtue of a preferably removable connecting element 26, which, in this case, is a screw element, hereinafter screw 26, coaxial to the axis A-A of the wheel pin 20. The screw 26 ensures a solid and secure connection, preventing any undesired movement of the spacer element 25 and therefore of the hubcap 30. The screw connection further offers the advantage of easy maintenance, allowing the spacer element 25 and/or the hubcap 30 to be easily removed or replaced. The mounting portion 25b is preferably bigger than the connecting portion 25a. The hubcap 30 is inserted in the mounting portion 25b. The hubcap 30 comprises an anchoring portion 32 connectable to the mounting portion 25b. The anchoring portion 32 is, for example, of the snap type and comprises elastically deformable flaps, inserted from the inner side into the mounting portion 25b. The flaps are angularly offset from one another and allow the hubcap 30 to be anchored to the mounting portion 25b, replicating the geometry thereof and maintaining a secure grip, also in the event of stress. The flaps deform when the hubcap 30 is inserted, but once in position, they return to the original shape thereof, securely blocking the hubcap 30. The flaps are extensions or protrusions, which, by virtue of the elasticity thereof, adapt to the shape of the mounting portion 25b. Once inserted, they reposition to prevent the hubcap 30 from being easily removed. This type of anchoring is advantageous in that it allows a stable fastening, yet easy removable without damaging the parts.

In a second embodiment, the spacer element 25' takes a tubular shape, in particular, with a constant section, and foresees a connecting portion 25a' coupled to the wheel pin 20 and mounted upstream of the fixing element 22. The connecting portion 25a'comprises an opening through which the wheel pin 20 passes. Also in this case, the spacer element 25' comprises, on the part opposite the connecting portion 25a', a mounting portion 25b' for receiving the hubcap 30. The spacer element 25' is preferably arranged in abutment between the bearings 14' and the fixing element 22. In particular, the connecting portion 25a' comprises a bottom wall 25c' provided with an opening shaped to be fitted onto the wheel pin 20.

Upstream mounting means that, firstly, the spacer element 25' is inserted and then, the fixing element 22 is mounted. Thereby, the spacer element 25' is brought into abutment against the bearings 14' by means of the fixing element 22. In particular, the bottom wall 25c' of the connecting portion 25a' serves as a protection for the bearings 14', against the possible ingress of debris and dirt. The tubular configuration of the spacer element 25' allows the fixing element 22 to be mounted easily, accessing the internal part of the spacer element 25'.

In a third embodiment, the hubcap 30 is provided with an anchoring portion 32' having a tubular shape, intended to create a form-fit coupling with the fixing element 22 of the wheel pin 20. This coupling ensures greater assembly precision, preventing play or loosening during use.

In particular, the hubcap 30 provided with the anchoring portion 32' is made in one piece, thus improving the overall structural resistance of the hubcap. The anchoring portion 32' is a portion extending in length and shaped to create a form-fit coupling with the fixing element 22, so as to obtain a secure and efficient coupling. In detail, if the fixing element 22 is a hexagonal nut, the anchoring portion 32' has a complementary hexagonal shape, allowing a stable, non-rotating coupling.

In particular, the surface of the visible face 31a of the hubcap 30 has an overall dimension radially extending to cover the pin seat 15c, as shown in figure 2. The size of the hubcap 30 substantially corresponds to the size of the pin seat 15c, keeping the gap G defined as a difference between the size of the hubcap 30, in particular of the covering portion 31, and the size of the pin seat 15c.

In an alternative embodiment, as shown in figures 6 and 7, the surface of the visible face 31a of the hubcap 30 has an overall dimension radially extending to also cover the fixing flange 15a of the rim 15. The visible face 31a therefore has an increased diametral size L, allowing the provision of a bigger logo, which is more visible from the outside. Also in this case, the hubcap 30 is spaced apart by a gap G with respect to the rim 15. In this case, the gap G is defined between the front face 18 of the wheel rim 15, in particular, between the surface 15a' of the fixing flange 15a and the rear face 31b of the hubcap 30.

As shown in figures 2 and 7, the hubcap 30 does not extend radially beyond the overall dimension of the hub 14. In particular, the hubcap 30 may almost entirely cover the hub 14, when frontally viewed along axis A-A, as shown in figure 7, or cover only partially, as shown in figure 2.

The above description of one or more specific embodiments shows the invention from a conceptual viewpoint so that others, using the prior art, will be able to modify and/or adapt the embodiments in various applications, without further research and without departing from the inventive concept, and, therefore, it is understood that such adaptations and modifications will be considered as equivalents of the specific embodiment. Means and materials for achieving the various functions described may be of a different nature, without thereby departing from the scope of the invention. It is understood that the used expressions or terminology have a purely descriptive purpose and are, therefore, non-limiting.

## Claims

1. Wheel assembly (10) for a motorcycle (100) comprising:
- a wheel rim (15) on which a tyre (16) is arranged,
- the wheel rim (15) being connected to a hub (14),
- wherein the hub (14) is rotatably mounted on a fixed, non-rotating wheel pin (20) which defines a rotation axis (A-A) of the wheel rim (15),
- a hubcap (30) arranged in correspondence with the wheel pin (20),
wherein the hubcap (30) is mounted integral with the wheel pin (20), such that when said wheel assembly (10) rotates about said wheel pin (20) said hubcap (30) does not rotate, and wherein said hubcap (30) is contained within the volume (V) defined by the wheel rim (15) and said tyre (16).

2. Wheel assembly (10) according to claim 1, wherein a gap (G) is defined between the hubcap (30) and the wheel rim (15), so that no contact occurs between the rotating wheel rim (15) and the non-rotating hubcap (30).

3. Wheel assembly (10) according to claims 1 or 2, wherein the hub (14) is fitted onto the wheel pin (20) and a fixing element (22) blocks the hub (14) onto the wheel pin (20), and wherein the hubcap (30) is mounted integrally with the wheel pin (20) and/or with said fixing element (22).

4. Wheel assembly (10) according to claim 3, wherein the hubcap (30) comprises a covering portion (31) and an anchoring portion (32) extending from the covering portion (31), wherein the anchoring portion (32) is shaped to achieve a direct or indirect coupling with the wheel pin (20) and/or said fixing element (22), and wherein the covering portion (31) comprises a visible face (31a), facing outwards, on which a logo and/or a symbol is shown, and a rear face (31b), facing towards the wheel rim (15).

5. Wheel assembly (10) according to claims 3 or 4, wherein a spacer element (25,25') is provided, mounted integrally with the wheel pin (20) and/or with said fixing element (22), and wherein said hubcap (30) is connected to said spacer element (25,25').

6. Wheel assembly (10) according to claim 5, wherein the spacer element (25,25') comprises a connection portion (25a,25a') suitable to be mounted in correspondence with the wheel pin (20) and a mounting portion (25b,25b'), which extends from the connection portion (25a,25a') and is shaped to accommodate said hubcap (30).

7. Wheel assembly (10) according to claims 5 or 6, wherein the spacer element (25) includes a connection portion (25a) arranged downstream of said fixing element (22), in particular said connection portion (25a) is arranged at the head (21) of said wheel pin (20) by means of at least one removable connection element (26).

8. Wheel assembly (10) according to claims 5 or 6, wherein the spacer element (25') includes a connection portion (25a') fitted onto the wheel pin (20) upstream of said fixing element (22), in particular, the spacer element (25') has a tubular shape and is integrally connected to the wheel pin (20) by means of the fixing element (22) of the wheel pin (20) itself.

9. Wheel assembly (10) according to claim 4, wherein the hubcap (30) comprises an anchoring portion (32) which extends in length shaped to create a direct coupling with said fixing element (22) of the wheel pin (20), in particular the anchoring portion (32) creates a form-fit coupling with the fixing element (22).

10. Wheel assembly (10) according to any of the preceding claims, wherein the hubcap (30) is sized so as to be contained within the hub (14) when viewed frontally along the rotation axis (A-A).

11. Motorcycle comprising at least one front wheel (10) and one rear wheel (50), wherein said front and/or rear wheel comprise a wheel assembly (10) according to any one of claims 1-10.
